Europäisches Patentamt

European Patent Office

Office européen des brevets

(19)

(11) Numéro de publication: **0 053 988**
**B1**

(12) **FASCICULE DE BREVET EUROPEEN**

(45) Date de publication du fascicule du brevet: **11.06.86**

(51) Int. Cl.⁴: **A 23 G 9/28**

(21) Numéro de dépôt: **81420146.3**

(22) Date de dépôt: **09.10.81**

(54) **Cuillère à glace.**

(30) Priorité: **08.12.80 FR 8026497**

(43) Date de publication de la demande:
**16.06.82 Bulletin 82/24**

(45) Mention de la délivrance du brevet:
**11.06.86 Bulletin 86/24**

(84) Etats contractants désignés:
**CH DE GB IT LI SE**

(56) Documents cités:
**GB-A- 331 433**
**US-A-2 260 689**
**US-A-3 299 838**
**US-A-3 992 604**

(73) Titulaire: **M T S INTERNATIONAL Société
anonyme
5, avenue des 3 Fontaines
F-74600 Annecy Seynod (FR)**

(72) Inventeur: **Sultan, Jean-Claude
rue des Bouleaux Les Valignons
F-74460 Marnaz (FR)**

(74) Mandataire: **Maureau, Philippe
Cabinet Germain & Maureau Le Britannia - Tour
C 20, bld Eugène Déruelle
F-69003 Lyon (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 053 988 B1

## Description

L'invention a pour objet une cuillère électrique à glace.

Pour prélever des portions de crèmes glacées, de sorbets ou, de façon générale, de glace comestible dans les bacs contenant ce genre d'aliments, et pour présenter ces portions, généralement sous forme hémisphérique, dans des assiettes, des coupes, des cornets ou autres, il est généralement fait usage de cuillères munies d'une élément qui possède une forme adaptée à celle de la face intérieure de la cuillère et qui, étant monté mobile le long de cette face, permet d'en décoller la portion de glace. Cet élément intérieur de la cuillère, qui joue le rôle de couteau, nécessite la présence d'organes tels que: paliers, axes d'articulation, pignon, crémaillère, levier-poussoir articulé, ... Il s'agit là d'un véritable mécanisme dont le prix de revient n'est certes pas très élevé, mais dont le nettoyage est relativement difficile et dont la fiabilité est souvent insuffisante. Ces cuillères mécaniques présentent donc deux défauts principaux: non respect d'une bonne hygiène alimentaire et résistance insuffisante à l'usage.

Il a certes été proposé des cuillères à chauffage électrique. Leur diffusion est cependant limitée, en raison d'un prix élevé résultant de leur complexité, car elles nécessitent la présence d'au moins les trois éléments ci-après: une résistance électrique, un thermostat et un interrupteur. Il en est ainsi avec une cuillère conforme au US—A—3.299.838, dont la tête est chauffée par une résistance électrique alimentée par un circuit traversant longitudinalement la poignée de l'ustensile et raccordée au secteur par une fiche équipée d'un thermostat. Il en est de même aussi avec une cuillère selon la US—A—3.992.604; il est ici prévu une pièce tubulaire intermédiaire qui est fixée sur la poignée et sert de support à une résistance électrique fixe et à une tête démontable, et un thermostat peut être monté sur le circuit alimentant cette résistance.

Il n'existe donc pas de cuillère à glace alliant les qualités essentielles suivantes: prix peu élevé, commodité d'utilisation, fiabilité, résistance à l'usure, et possibilité d'un nettoyage facile et complet garantissant une bonne hygiène.

L'invention pallie cette lacune. Elle a pour objet une cuillère de type électrique comportant en combinaison:

— une tête massive en alliage léger, à l'intérieur de laquelle est logé un élément électrique chauffant thermostatique et régulateur;

— un manche tubulaire servant de poignée;

— une carcasse tubulaire rigide, mais isolante, interposée entre la tête et le manche;

— et une gaine intérieure thermo-rétractable réalisant une liaison étanche entre l'élément électrique chauffant et un cordon de branchement électrique traversant le manche.

L'invention sera bien comprise d'ailleurs à l'aide de la description qui suit, en référence au dessin schématique annexé, représentant à titre d'exemple non limitatif une forme d'exécution de cette cuillère à glace;

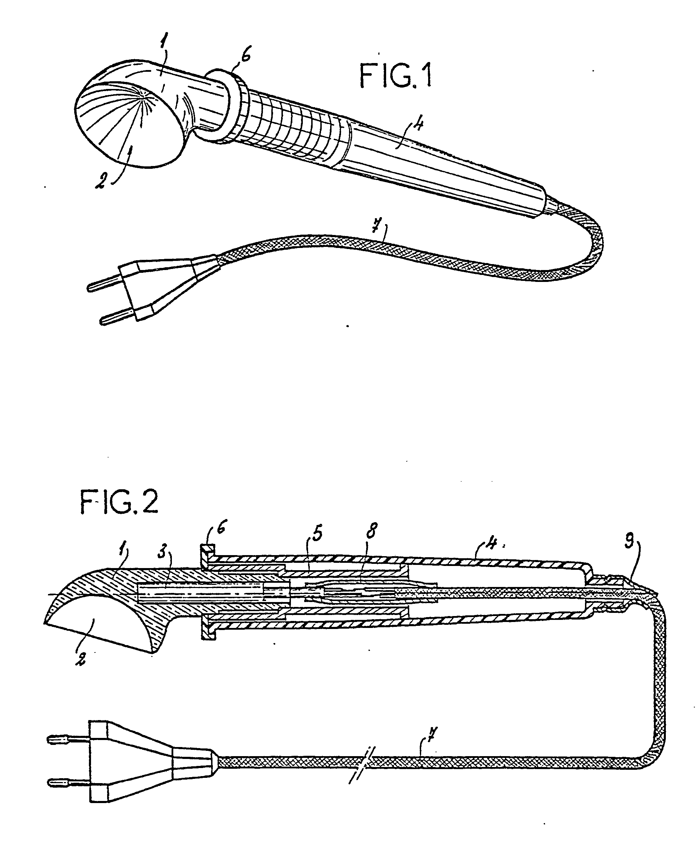

Figure 1 en est une vue en perspective;

Figure 2 en est une vue en coupe longitudinale.

Dans ce dessin, 1 désigne la tête de la cuillère, tête qui est fabriquée par fonderie en un alliage métallique alimentaire à base d'aluminium; cette tête présente une face évidée 2 qui est profilée pour permettre le découpage de portions de glace de forme plus ou moins sphérique; et dans cette tête 1 est aménagée une cavité à l'intérieur de laquelle est logé et immobilisé un élément électrique chauffant 3 dans lequel sont intégrés des moyens thermostatiques et autorégulateurs.

Cette tête 3 est montée à l'extrémité d'un manche tubulaire 4 réalisé par exemple par moulage en une matière plastique telle qu'un polyester; mais entre la tête 1 et le manche 4 est interposée une carcasse tubulaire 5 qui est rigide et isolante. Une virole 6 est placée à l'extrémité du manche 4 et contribue à la liaison avec la tête 1, en dissimulant la carcasse isolante 5.

L'alimentation de cette cuillère en courant électrique est obtenue au moyen d'un cordon de raccordement 7 qui pénètre à l'intérieur du manche 4 et auquel est raccordé l'élément chauffant 3. Il est d'ailleurs à remarquer que la connexion entre cet élément et le cordon est protégée par une gaine thermorétractable 8 qui réalise une liaison étanche entre la partie extérieure de l'élément chauffant 3 et le cordon 7. Une autre gaine thermorétractable 9 est d'ailleurs prévue au passage du cordon 7 dans l'extrémité du manche 4.

Cette cuillère à glace présente les principaux avantages ci-après:

— ne comportant aucun élément mécanique devant être animé d'un mouvement particulier, elle est à la fois robuste et hygiénique;

— bien que comportant un moyen de chauffage électrique, elle ne présente aucun danger en raison, non seulement des moyens d'isolation électrique prévus à son intérieur, mais aussi en raison des moyens d'isolation thermique qu'elle comporte, et grâce auxquels son manche ne dépasse pas une température de l'ordre de 30 à 40°C.

## Revendication

Cuillère électrique à glace, caractérisée en ce qu'elle comporte en combinaison:

— une tête massive en alliage léger (1), à l'intérieur de laquelle est logé un élément électrique chauffant thermostatique et autorégulateur (3);

— un manche tubulaire (4) servant de poignée;

— une carcasse tubulaire rigide mais isolante (5) interposée entre la tête (2) et le manche (4);

— et une gaine intérieure thermorétractable (8) réalisant une liaison étanche entre l'élément électrique chauffant (3) et un cordon de branchement (7).

**Patentanspruch**

Elektrischer Eisportionierlöffel, gekennzeichnet durch

einen aus einer Leichtmetallegierung bestehenden massiven Kopf (1), in dem sich ein thermostatisches und selbstregelndes elektrisches Heizelement (3) befindet,

ein als Handgriff dienendes rohrförmiges Heft (4),

ein zwischen dem Kopf (2) und dem Heft (4) angeordnetes starres, jedoch isolierendes Rohrstück (5)

und einen wärmeschrumpfbaren inneren Mantel (8), der eine dichte Verbindung zwischen dem elektrischen Heizelement (3) und einer Anschlußleitung (7) herstellt.

**Claim**

An electric ice cream scoop, characterised in that it comprises in combination:

— a head of light alloy having substantial bulk, within which is housed a thermostatic and self-regulating electrical element (3);

— a tubular sleeve (4) serving as a handle;

— a rigid tubular insulating body (5) interposed between the head (2) and the sleeve (4);

— and an internal heat-shrinkable sheath forming a sealed connection between the electrical heating element and a connector flex.

FIG.1

FIG.2